# EUROPÄISCHE PATENTSCHRIFT

(11) **EP 1 841 625 B1**
(45) Veröffentlichungstag und Bekanntmachung des Hinweises auf die Patenterteilung: **25.06.2008**
(21) Anmeldenummer: 05816229.8
(22) Anmeldetag: 06.12.2005
(51) Int. Cl.: B60R 21/01

(54) **VERFAHREN UND VORRICHTUNG ZUR AUSLÖSUNG EINER REVERSIBLEN INSASSENSCHUTZFUNKTION IN EINEM KRAFTFAHRZEUG**
METHOD AND DEVICE FOR RELEASING A REVERSIBLE PASSENGER PROTECTION FUNCTION IN A MOTOR VEHICLE
PROCEDE ET DISPOSITIF POUR DECLENCHER UNE FONCTION DE PROTECTION REVERSIBLE DES OCCUPANTS DANS UN VEHICULE AUTOMOBILE

(30) Priorität: 18.01.2005 DE 102005002241
(43) Veröffentlichungstag der Anmeldung: 10.10.2007
(73) Patentinhaber: ROBERT BOSCH GMBH, 70442 Stuttgart (DE)
(72) Erfinder: MEISTER, Dirk, 71696 Moeglingen (DE)
(86) Internationale Anmeldenummer: PCT/EP2005/056527
(87) Internationale Veröffentlichungsnummer: WO 2006/076986

(56) Entgegenhaltungen:
- DE-A1- 10 303 149
- DE-A1- 10 317 640
- DE-A1- 19 811 865
- US-B1- 6 370 461

## Beschreibung

### Stand der Technik

Die Erfindung betrifft ein Verfahren zur Auslösung einer reversiblen Insassenschutzfunktion in einem Kraftfahrzeug.

Aus der DE 103 03 149 A1 ist ein Verfahren zur Bildung einer Auslöseentscheidung für ein Rückhaltesystem bekannt, das sich dadurch auszeichnet, dass die Auslöseentscheidung in Abhängigkeit von einer Verknüpfung der Fahrzeugquerbeschleunigung und einer Drehrate gebildet wird. Die Fahrzeugquerbeschleunigung wird zusätzlich einer Schwellwertentscheidung unterzogen, wobei der jeweilige Schwellwert in Abhängigkeit von wenigstens einer Komponente der Fahrzeugschwerpunktsgeschwindigkeit eingestellt wird.

Die Merkmale der Oberbegriffe der unabhängigen Ansprüche sind der DE 103 03 149 A1 entnommen.

Aus dem Dokument US-B1-6370461 ist ein Verfahren nach dem Oberbegriff des Anspruchs 1 bekannt.

### Vorteile der Erfindung

Die Erfindung betrifft ein Verfahren zur Auslösung einer reversiblen Insassenschutzfunktion in einem Kraftfahrzeug,
- bei dem der Wert einer Auslösegröße ermittelt wird,
- der Wert der Auslösegröße mit einem vorgegebenen Schwellenwert verglichen wird und
- abhängig von dem Vergleich, z.B. bei Überschreiten des vorgegebenen Schwellenwerts durch den Wert der Auslösegröße, die Insassenschutzfunktion ausgelöst wird. Der Kern der Erfindung ist dadurch gekennzeichnet, dass
- der Schwellenwert vom Fahrer und/oder durch dessen Fahrverhalten beeinflussbar ist. Insbesondere wird der Schwellenwert
- durch eine durch Auswertung der Fahrpedalbetätigungsvorgänge ermittelte Fahrstilgröße und/oder
- durch ein vom Fahrer betätigbares Bedienelement beeinflusst.
   Dadurch ist eine individuelle Anpassung der Schwellenwerte an den Komfortbereich des Fahrers möglich. Die Fahrstilgröße repräsentiert das Fahrverhalten des Fahrers.

Eine vorteilhafte Ausgestaltung der Erfindung ist dadurch gekennzeichnet, dass es sich bei der Auslösegröße um die Querbeschleunigung des Kraftfahrzeugs handelt. Da ein Querbeschleunigungssensor in zahlreichen Fahrdynamikregelungssystemen bereits vorhanden ist, lässt sich die Erfindung dadurch ohne zusätzliche Sensoren realisieren.

Eine vorteilhafte Ausgestaltung der Erfindung ist dadurch gekennzeichnet,
- dass der Schwellenwert vom Fahrer über ein Bedienelement vorgegeben wird, wobei der Fahrer zwischen wenigstens zwei unterschiedlichen, endlichen Schwellenwerten wählen bzw. unterscheiden kann oder
- dass der Schwellenwert durch Auswertung der durch Fahrpedalbetätigungsvorgänge ermittelten Fahrstilgröße vorgegeben wird, wobei der Schwellenwert wenigstens zwei unterschiedliche, endliche Werte annehmen kann.
Unter dem Begriff "endlicher Schwellenwert" wird dabei ein nicht unendlich großer Schwellenwert verstanden.

Eine vorteilhafte Ausgestaltung der Erfindung ist dadurch gekennzeichnet, dass es sich bei der reversiblen Insassenschutzfunktion um
- ein automatisches Schließen wenigstens eines Fensters oder
- ein automatisches Schließen des Schiebedachs oder
- eine Anpassung der Kopfstützenposition oder
- ein Straffen reversibler Gurtstraffer oder
- ein Aufstellen der Sitzlehnen oder
- einen Eingriff in die Fahrdynamik, z.B. eine kurze Warnbremsung, handelt.
Durch die Reversibilität der ausgelösten Insassenschutzfunktion kann die Erfindung gleichzeitig zur Auslösung eines Warnsignals an den Fahrer benutzt werden. Dieses Warnsignal, d.h. zum Beispiel das automatisches Schließen der Fenster oder des Schiebedachs, erinnert den Fahrer daran, seinen Fahrstil zu ändern.

Weiter betrifft die Erfindung eine Vorrichtung zur Auslösung einer reversiblen Insassenschutzfunktion in einem Kraftfahrzeug, enthaltend
- Ermittlungsmittel zur Ermittlung des Wertes einer Auslösegröße,
- Vergleichsmittel, in denen der Wert der Auslösegröße mit einem vorgegebenen Schwellenwert verglichen wird und
- Auslösemittel, in denen abhängig von dem Vergleich (z.B. bei Überschreiten des vorgegebenen Schwellenwerts durch den Wert der Auslösegröße) die Insassenschutzfunktion ausgelöst wird,
Der Kern der erfindungsgemäßen Vorrichtung ist dadurch gekennzeichnet, dass der Schwellenwert vom Fahrer beeinflussbar ist, bzw. dass Mittel zur Beeinflussung des Schwellenwerts durch den Fahrer vorhanden sind.
Insbesondere wird in den Mitteln zur Beeinflussung des Schwellenwerts dieser Schwellenwert
- durch eine durch Auswertung der Brems- und/oder Fahrpedalbetätigungsvorgänge ermittelte Fahrstilgröße und/oder
- durch ein vom Fahrer betätigbares Bedienelement
   beeinflusst.
   Die vorteilhaften Ausgestaltungen des erfindungsgemäßen Verfahrens äußern sich auch als vorteilhafte Ausgestaltungen der erfindungsgemäßen Vorrichtung und umgekehrt.

### Zeichnung

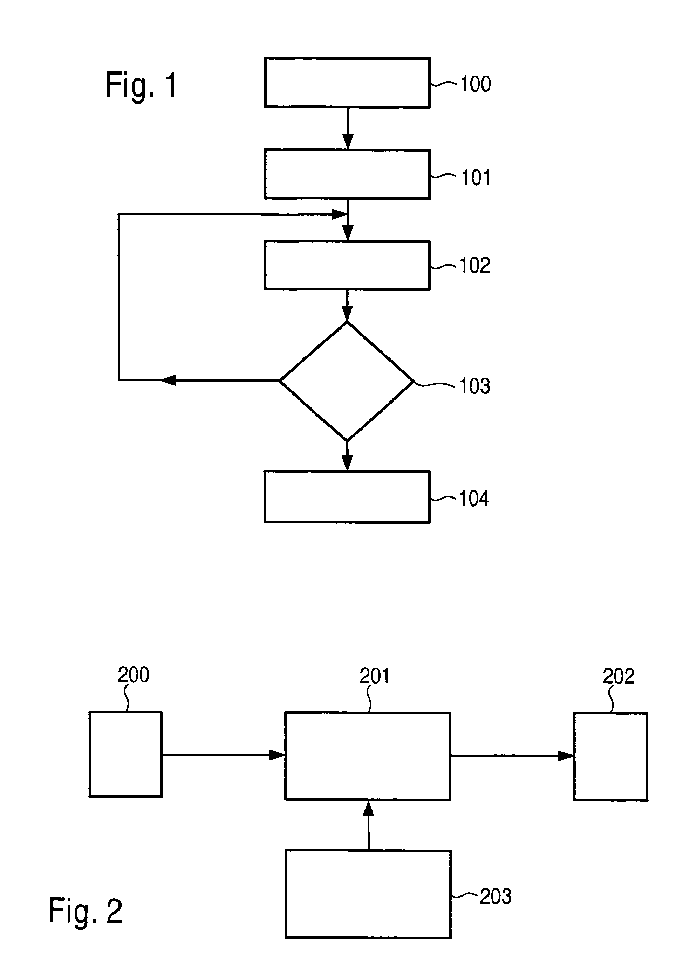

Die Zeichnung besteht aus den Figuren 1 und 2.
Figur 1 zeigt den Ablauf des erfindungsgemäßen Verfahrens.
Figur 2 zeigt den Aufbau der erfindungsgemäßen Vorrichtung.

### Ausführungsbeispiele

Bei den meisten Fahrern von Kraftfahrzeugen ist ein Komfortbereich innerhalb ihres Fahrverhaltens zu beobachten. Dieser Komfortbereich bezieht sich auf Beschleunigungen, die der Fahrer noch toleriert, ohne sich hierbei unwohl oder unsicher zu fühlen. Die jeweiligen Grenzwerte sind für die Quer- und die Längsbeschleunigung unterschiedlich und sind zudem noch geschwindigkeitsabhängig. Als Beispiel für die Abhängigkeit der Querbeschleunigungskomfortgrenze von der Geschwindigkeit sei genannt, dass ein Fahrer bei niedrigen Geschwindigkeiten ein Ausweich- oder Abbiegemanöver mit einer auftretenden Querbeschleunigung von 0.5g sicher fährt, er sich aber ein derartiges Fahrmanöver bei einer hohen Geschwindigkeit (z.B. 180 km/h) nicht mehr zutraut. Gleiches gilt für die Längsbeschleunigung. Ein typischer Fahrer traut sich bei geringen Geschwindigkeiten eine wesentlich größere Längsbeschleunigung als 0.5g zu, während die meisten Fahrer bei hohen Geschwindigkeiten bei einer Vollverzögerung Angst haben. Dabei ist g die Erdbeschleunigung mit g ≈ 9.81 m/s².

Die Erfindung stellt ein Verfahren zur Verfügung, welches dann die Fahrsicherheit erhöhende Aktionen auslöst, wenn der Fahrer oberhalb seiner Komfortgrenzen fährt. In diesem Fall wird eine erhöhte Unfallgefahr angenommen und es werden Aktionen zur Steigerung der Sicherheit der Fahrzeuginsassen durchgeführt. Diese Aktionen umfassen zum Beispiel
- Schließen der Fenster,
- Schließen des Schiebedachs,
- Anpassung der Kopfstützenposition,
- Straffen reversibler Gurtstraffer,
- Aufstellen der Sitzlehnen und
- Eingriffe in die Fahrdynamik.
   Diese Aktionen haben neben der Erhöhung der Sicherheit der Insassen auch das Ziel, dass der Fahrer über die Kritikalität der Situation informiert wird. Die oben beispielhaft genannten Aktionen können einzeln oder zusammen aktiviert werden. Ferner ist es möglich, dass die Anzahl und die Art der Aktionen damit skaliert, wie weit der Fahrer oberhalb seiner Komfort- bzw. Sicherheitsgrenzen fährt.

Der Ablauf des erfindungsgemäßen Verfahrens ist in Fig. 1 dargestellt. Nach dem Start des Verfahrens in Block 100 wird in Block 101 der Schwellenwert für die Auslösegröße durch den Fahrer selbst oder automatisch anhand einer Auswertung des Fahrerverhaltens (z.B. einer automatischen Erkennung und Klassifikation seines Fahrstils) festgelegt. In Block 102 wird anschließend der Wert einer Auslösegröße ermittelt wird. In Block 103 wird der Wert der Auslösegröße mit einem vorgegebenen Schwellenwert verglichen. Bei Überschreiten des vorgegebenen Schwellenwerts durch den Wert der Auslösegröße wird in Block 104 die Insassenschutzfunktion ausgelöst. Wird der Schwellenwert nicht überschritten, dann wird zu Block 102 zurückverzweigt.

Der Aufbau der erfindungsgemäßen Vorrichtung ist in Fig. 2 dargestellt.
Dabei stellt Block 200 die Ermittlungsmittel zur Ermittlung des Wertes einer Auslösegröße dar. Dieser Wert wird an Vergleichsmittel 201 weitergeleitet, in denen der Wert der Auslösegröße mit einem vorgegebenen Schwellenwert verglichen wird. Abhängig von dem Vergleich (z.B. bei Überschreiten des vorgegebenen Schwellenwerts durch den Wert der Auslösegröße) wird die Insassenschutzfunktion 202 im Sinne einer Auslösung angesteuert. Block 203 kennzeichnet z.B. ein Bedienelement, über welches der Fahrer den Schwellenwert vorgeben, unter einer vorgegebenen Menge auswählen, oder beeinflussen kann. Block 203 kann jedoch auch als Fahrstilermittlungsmittel ausgeprägt sein, in welchem der Schwellenwert selbsttätig durch Auswertung des Fahrstils des Fahrers (z.B. durch Auswertung der Brems- oder Fahrpedalbetätigungsvorgänge des Fahrers) ermittelt wird.

## Patentansprüche

1. Verfahren zur Auslösung einer reversiblen Insassenschutzfunktion in einem Kraftfahrzeug,
- bei dem der Wert einer Auslösegröße ermittelt wird (102),
- der Wert der Auslösegröße mit einem vorgegebenen Schwellenwert verglichen wird (103) und
- abhängig von dem Vergleich (103) die Insassenschutzfunktion ausgelöst wird (104), **dadurch gekennzeichnet, dass** der Schwellenwert
- durch eine durch Auswertung der Fahrpedalbetätigungsvorgänge ermittelte Fahrstilgröße und/oder
- durch ein vom Fahrer betätigbares Bedienelement beeinflusst wird.

2. Verfahren nach Anspruch 1, **dadurch gekennzeichnet, dass** es sich bei der Auslösegröße um die Querbeschleunigung des Kraftfahrzeugs handelt.

3. Verfahren nach Anspruch 1, **dadurch gekennzeichnet,**
- **dass** der Schwellenwert vom Fahrer über ein Bedienelement vorgegeben wird, wobei der Fahrer zwischen wenigstens zwei unterschiedlichen, endlichen Schwellenwerten wählen kann oder
- **dass** der Schwellenwert durch Auswertung der durch Fahrpedalbetätigungsvorgänge ermittelten Fahrstilgröße vorgegeben wird, wobei der Schwellenwert wenigstens zwei unterschiedliche, endliche Werte annehmen kann.

4. Verfahren nach Anspruch 1, **dadurch gekennzeichnet, dass** es sich bei der reversiblen Insassenschutzfunktion um
- ein automatisches Schließen wenigstens eines Fensters oder
- ein automatisches Schließen des Schiebedachs oder
- eine Anpassung der Kopfstützenposition oder
- ein Straffen reversibler Gurtstraffer oder
- ein Aufstellen der Sitzlehnen oder
- einen Eingriff in die Fahrdynamik handelt.

5. Verfahren nach Anspruch 1, **dadurch gekennzeichnet, dass** bei Überschreiten des vorgegebenen Schwellenwerts durch den Wert der Auslösegröße die Insassenschutzfunktion ausgelöst wird.

6. Vorrichtung zur Auslösung einer reversiblen Insassenschutzfunktion in einem Kraftfahrzeug, enthaltend
- Ermittlungsmittel (200) zur Ermittlung des Wertes einer Auslösegröße,
- Vergleichsmittel (201), in denen der Wert der Auslösegröße mit einem vorgegebenen Schwellenwert verglichen wird und
- Auslösemittel (202), in denen abhängig von dem Vergleich die Insassenschutzfunktion ausgelöst wird,
**dadurch gekennzeichnet, dass**
- Mittel (203) zur Beeinflussung des Schwellenwerts vorhanden sind, in denen
- durch eine durch Auswertung der Fahrpedalbetätigungsvorgänge ermittelte Fahrstilgröße und/oder
- durch ein vom Fahrer betätigbares Bedienelement der Schwellenwert beeinflusst wird.

7. Vorrichtung nach Anspruch 6, **dadurch gekennzeichnet, dass** es sich bei der Auslösegröße um die Querbeschleunigung des Kraftfahrzeugs handelt.

8. Vorrichtung nach Anspruch 6, **dadurch gekennzeichnet,**
- **dass** der Schwellenwert vom Fahrer über ein Bedienelement vorgegeben wird, wobei der Fahrer zwischen wenigstens zwei unterschiedlichen, endlichen Schwellenwerten wählen kann oder
- **dass** der Schwellenwert durch Auswertung der durch Fahrpedalbetätigungsvorgänge ermittelten Fahrstilgröße vorgegeben wird, wobei der Schwellenwert wenigstens zwei unterschiedliche, endliche Werte annehmen kann.

9. Vorrichtung nach Anspruch 6, **dadurch gekennzeichnet, dass** es sich bei der reversiblen Insassenschutzfunktion um
- ein automatisches Schließen wenigstens eines Fensters oder
- ein automatisches Schließen des Schiebedachs oder
- eine Anpassung der Kopfstützenposition oder
- ein Straffen reversibler Gurtstraffer oder
- ein Aufstellen der Sitzlehnen oder
- einen Eingriff in die Fahrdynamik handelt.

## Claims

1. Method for triggering a reversible vehicle occupant protection function in a motor vehicle,
- in which the value of a triggering variable is determined (102),
- the value of the triggering variable is compared (103) with a predefined threshold value, and
- the vehicle occupant protection function is triggered (104) as a function of the comparison (103), **characterized in that** the threshold value is influenced
- by a driving style variable which is determined by evaluating the accelerator pedal activation processes and/or
- by an operator control element which can be activated by the driver.

2. Method according to Claim 1, **characterized in that** the triggering variable is the lateral acceleration of the motor vehicle.

3. Method according to Claim 1, **characterized**
- **in that** the threshold value is predefined by the driver by means of an operator control element, wherein the driver can select between at least two different finite threshold values or
- **in that** the threshold value is predefined by evaluating the driving style variable determined by means of accelerator pedal activation processes, wherein the threshold value can assume at least two different finite values.

4. Method according to Claim 1, **characterized in that** the reversible vehicle occupant protection function involves
- automatic closing of at least one window or
- automatic closing of the sunroof or
- adaptation of the headrest position or
- tautening of reversible seatbelt pretensioners or
- placing of the seat backrests in an upright position or
- intervention in the movement dynamics of the vehicle.

5. Method according to Claim 1, **characterized in that** the vehicle occupant protection function is triggered when the predefined threshold value is exceeded by the value of the triggering variable.

6. Device for triggering a reversible vehicle occupant protection function in a motor vehicle, containing
- determining means (200) for determining the value of a triggering variable,
- comparison means (201) in which the value of the triggering variable is compared with a predefined threshold value, and
- triggering means (202) in which the vehicle occupant protection function is triggered as a function of the comparison,
**characterized in that**
- means (203) for influencing the threshold value are provided, in which means (203) the threshold value is influenced
- by a driving style variable which is determined by evaluating the accelerator pedal activation processes and/or
- by an operator control element which can be activated by the driver.

7. Device according to Claim 6, **characterized in that** the triggering variable is the lateral acceleration of the motor vehicle.

8. Device according to Claim 6, **characterized**
- **in that** the threshold value is predefined by the driver by means of an operator control element, wherein the driver can select between at least two different finite threshold values, or
- **in that** the threshold value is predefined by evaluating the driving style variable which is determined by means of accelerator pedal activation processes, wherein the threshold value can assume at least two different finite values.

9. Device according to Claim 6, **characterized in that** the reversible vehicle occupant protection function involves
- automatic closing of at least one window or
- automatic closing of the sunroof or
- adaptation of the headrest position or
- tautening of reversible seatbelt pretensioners or
- placing of the seat backrests in an upright position or
- intervention in the movement dynamics of the vehicle.

## Revendications

1. Procédé de déclenchement d'une fonction réversible de protection des passagers d'un véhicule automobile, selon lequel
- on détermine (102) la valeur d'une grandeur de déclenchement,
- on compare (103) la valeur de la grandeur de déclenchement à une valeur de seuil prédéfinie et
- en fonction de la comparaison (103) on déclenche (104) la fonction de protection des passagers,
**caractérisé en ce qu'**
on influence la valeur de seuil
- par une grandeur de style de conduite déterminée par l'exploitation des opérations d'actionnement de la pédale d'accélérateur et/ou
- par un élément de commande actionné par le conducteur.

2. Procédé selon la revendication 1,
**caractérisé en ce que**
la grandeur de déclenchement est l'accélération transversale du véhicule.

3. Procédé selon la revendication 1,
**caractérisé en ce que**
- la valeur de seuil est prédéfinie par le conducteur par l'intermédiaire d'un élément de commande et le conducteur peut sélectionner entre au moins deux valeurs de seuil finies, différentes, ou
- la valeur de seuil est prédéfinie par l'exploitation de la grandeur de style de conduite déterminée, par les opérations d'actionnement de la pédale d'accélérateur,
- la valeur de seuil prenant au moins deux valeurs finies, différentes.

4. Procédé selon la revendication 1,
**caractérisé en ce que**
la fonction réversible de protection des passagers est
- la fermeture automatique d'au moins une fenêtre ou
- la fermeture automatique du toit ouvrant ou
- l'adaptation de la position des repose-tête ou
- la mise en tension de tendeurs réversibles de ceintures ou
- le relevage des dossiers de sièges ou
- une action sur la dynamique de roulage.

5. Procédé selon la revendication 1,
**caractérisé en ce qu'**
au dépassement de la valeur de seuil prédéfinie par la valeur de la grandeur de déclenchement on déclenche la fonction de protection des passagers.

6. Dispositif de déclenchement d'une fonction réversible de protection des passagers dans un véhicule automobile comprenant
- des moyens de détermination (200) pour déterminer la valeur d'une grandeur de déclenchement,
- des moyens de comparaison (201) qui comparent la valeur de la grandeur de déclenchement à une valeur de seuil prédéfinie et
- des moyens de déclenchement (202) dans lesquels on déclenche la fonction de protection des passagers en fonction de la comparaison,
**caractérisé par**
- des moyens (203) pour influencer la valeur du seuil par
- une exploitation de la grandeur correspondant au style de conduite déterminé par les opérations d'actionnement de la pédale d'accélérateur et/ ou
- par un élément de commande actionné par le conducteur.

7. Dispositif selon la revendication 6,
**caractérisé en ce que**
la grandeur de déclenchement est l'accélération transversale du véhicule automobile.

8. Dispositif selon la revendication 6,
**caractérisé en ce que**
- la valeur de seuil est prédéfinie par le conducteur à l'aide d'un élément de commande et le conducteur peut sélectionner entre au moins deux valeurs de seuil, finies, différentes, ou
- la valeur de seuil est prédéfinie par l'exploitation de la grandeur de style de conduite déterminé à partir des opérations d'actionnement de la pédale d'accélérateur, la valeur de seuil pouvant prendre au moins deux valeurs finies, différentes.

9. Dispositif selon la revendication 6,
**caractérisé en ce que**
la fonction réversible de protection des passagers est
- une fermeture automatique d'au moins une fenêtre ou
- une fermeture automatique du toit ouvrant ou
- une adaptation de la position des repose-tête ou
- une tension d'un tendeur de courroie réversible ou
- un relevage des dossiers de sièges ou
- une action sur la dynamique de roulage.
